# EUROPÄISCHE PATENTSCHRIFT

(11) **EP 0 131 202 B1**
(45) Veröffentlichungstag und Bekanntmachung des Hinweises auf die Patenterteilung: **14.01.1987**
(21) Anmeldenummer: 84107381.0
(22) Anmeldetag: 27.06.1984
(51) Int. Cl.: C08L 67/02, C08L 69/00

(54) **Thermoplastische Polyester-Formmassen mit hoher Zähigkeit**
Thermoplastic polyester moulding masses with high tenacity
Masses à mouler thermoplastiques en polyester à haute ténacité

(30) Priorität: 06.07.1983 DE 3324398; 27.10.1983 DE 3339001
(43) Veröffentlichungstag der Anmeldung: 16.01.1985
(73) Patentinhaber: BAYER AG, 51368 Leverkusen (DE)
(72) Erfinder: Binsack, Rudolf, Dr., D-4150 Krefeld (DE); Rempel, Dieter, Dr., D-5090 Leverkusen (DE); Lindner, Christian, Dr., D-5000 Koeln 60 (DE); Morbitzer, Leo, Dr., D-5000 Koeln 80 (DE)

## Beschreibung

Gegenstand der Erfindung sind thermoplastische Formmassen mit verbesserter Schlagzähigkeit bei tiefen Temperaturen aus thermoplastischen Polyestern, insbesondere aus Polyalkylenterephthalaten, und gepfropften, wenigstens partiell vernetzten Dienkautschuken und/oder Acrylatkautschuken mit bimodaler Verteilung der Kautschukteilchendurchmesser.

Thermoplastische Polyester, vornehmlich Polyethylenterephthalat, Polybutylenterephthalat und einige Copolyester haben wegen ihrer herausragenden technologischen Eigenschaften, wie Steifigkeit, Härte, Abriebfestigkeit, dynamische und thermische Belastbarkeit, sowie wegen ihrer schnellen Verarbeitbarkeit zunehmend technische Bedeutung erlangt. Ein Nachteil dieser Polyester ist ihre unbefriedigende Zähigkeit.

Es gibt eine Reihe von Vorschlägen, die Zähigkeit der thermoplastischen Polyester durch Zumischen anderer Polymerer zu verbessern. So wurden vorgeschlagen (Co)polystyrole (DE-OS 1 694 173, DE-OS 1 961 226, DE-OS 2 035 390, DE-OS 2 248 242), Polyolefine (Ep-A 13 941), gepfropfte Acrylatkautschuke (DE-PS 2 444 584, DE-OS 2 726 256) und gepfropfte Dienkautschuke (DE-PS 2 348 377). Es wurden darüber hinaus 'gepfropfte Acrylatkautschuke und gepfropfte Dienkautschuke vorgeschlagen, die eine ganz spezifische Pfropfstruktur aufweisen bzw. die nach bestimmten Verfahren hergestellt worden sind (EP-A 22 216, EP-A 50 265, EP-A 50 262, EP-A 64 207, DE-OS 3 114 772).

Die vorgeschlagenen Formmassen weisen im allgemeinen eine verbesserte Zähigkeit auf. Es hat sich aber gezeigt, daß sie für wichtige Anwendungen nicht immer voll befriedigen, beispielsweise im Kfz-Bereich, wo bei Zusammenstößen große Deformationskräfte wirksam werden können, z.B. an der Karosserie, den Stoßfängern und Spoilern, dem Lenkrad und der Lenkradsäule. Es werden dafür besondere Anforderungen gestellt, auch für tiefe Temperaturen bis -20° C, z.T. bis -30° C.

Gegenstand der Erfindung sind daher thermoplastische Formmassen aus
A) 65-97, vorzugsweise 70-95, insbesondere 75-90, Gew.-% (bezogen auf A + B) thermoplastischem Polyester aus aromatischen Dicarbonsäuren (oder deren Derivaten) und aliphatischen cycloalphatischen, aralipatischen oder aromatischen Diolen,
   wobei bis zu 80 Gew.-% des thermoplastischen Polyesters durch aromatisches Polycarbonat ersetzt sein können, und
B) 3-35, vorzugsweise 5-30, insbesondere 10-25, Gew.-% (bezogen auf A + B) Pfropfprodukt von wenigstens einem Vinylmonomeren aus der Reihe Styrol, Acrylnitril, Methylmethacrylat auf teilchenförmige, wenigstens partiell vernetzte Dienkautschuke und/oder Alkylacrylatkautschuke mit mittleren Kautschukteilchendurchmessern von 0,05 bis 1 um und mit einem Kautschukgehalt der Pfropfprodukte von 60 bis 85, vorzugsweise 65 bis 80, insbesondere 70 bis 75, Gew.-%, und mit Gelgehalten von mindestens 50, vorzugsweise mindestens 80 und insbesondere mindestens 90 Gew.-%,
   mit der Maßgabe, daß gegebenenfalls im Pfropfprodukt
   B) vorliegendes freies Copolymerisat der Pfropfmonomeren mit einem Staudinger-Index [η]≤ 0.6 dl/g, gemessen in DMF bei 25°C, eine Menge von 15 Gew.-% nicht überschreitet,
      dadurch gekennzeichnet, daß dem Pfropfprodukt B folgende Kautschuke zugrundeliegen:
      a) 20 bis 80, vorzugsweise 30 bis 70, insbesondere 35 bis 60 Gew.-% (bezogen auf die Summe a + b und berechnet als Feststoff) eines Kautschuklatex mit einem Teilchendurchmesser d₅₀ von 0,05 bis 0,19, vorzugsweise 0,08 bis 0,15 um, und
      b) 80 bis 20, vorzugsweise 70 bis 30, insbesondere 65 bis 40 Gew.-% (bezogen auf die Summe a + b und berechnet als Feststoff) eines Kautschuklatex mit einem Teilchendurchmesser d₅₀ von 0,2 bis 1, vorzugsweise 0,25 bis 0,8, insbesondere 0,3 bis 0,6, µm,
         mit der Maßgabe, daß
         1) d₅₀ (b) um den Faktor 1,5 bis 8, vorzugsweise 2,7 bis 5, insbesondere 3 bis 4,5, größer ist als d₅₀ (a),
         2) der Quotient Q = (dgₒ - d₁₀)/d₅₀ der einzelnen Kautschuke jeweils höchstens 2, vorzugsweise höchstens 1,8, insbesondere höchstens 0,8, und
         3) die Differenz d₁₀ (b) - dgₒ (a) 0,01 bis -0,10, vorzugsweise 0 bis -0,08, insbesondere 0 bis 0,05, betragen.

Die Gewichtsangaben der Kautschuklatices sind jeweils auf Feststoff bezogen. Dabei kann man zur Herstellung des Pfropfproduktes B entweder einen Kautschuklatex entsprechend a) und einen Kautschuklatex entsprechend b) in dem angegebenen Mengenverhältnis mischen und die Vinylmonomeren auf dieses Gemisch pfropfpolymerisieren oder die Vinylmonomeren auf einen Kautschuklatex entsprechend a) und auf einen Kautschuklatex entsprechend b) getrennt voneinander pfropfpolymerisieren und die beiden Pfropfprodukte (entweder als Latices mit nachfolgender gemeinsamer Fällung oder als bereits vorhandene Feststoffe) mischen. Bevorzugt ist die zweite Methode.

Diese Formmassen sind für die oben genannten Anwendungen besser geeignet als bekannte, haben aber dennoch keine nennenswerten Nachteile.

Es ist wesentlich, wenigstens partiell vernetzte Dienkautschuke und/oder Acrylatkautschuke mit Kautschukteilchengrößen von 0,05 bis 1 µm zu verwenden, die eine "bimodale" Teilchendurchmesserverteilung haben.

Das bedeutet, durch Kombination bestimmter grobteiliger Kautschuke mit bestimmten feinteiligen Kautschuken in Form von Pfropfpolymerisaten B werden erfindungsgemäße Formmassen wesentlich verbesserter Eigenschaften erhalten; dazu muß die Kautschukteilchengrößenverteilung, die zur Herstellung von Komponente B eingesstzt wird, bimodal sein und soll zwei deutliche Maxima aufweisen. Um den mit diesen spezifischen Teilchengrößenverteilungen zusammenhängenden Effekt jedoch zu beobachten, ist es erforderlich, von Kautschuken auszugehen, deren Teilchengrößenverteilung bestimmten Parametern gehorchen: Dazu gehören eine kritische Breite der Verteilungskurve (ausgedrückt durch den Quotienten Q), ein kritischer Abstand der Verteilungskurvenmaxima (ausgedrückt durch die Differenz dₛₒ (b) - dₛₒ (a)) sowie eine kritische Überlappung der Verteilungskurven (ausgedrückt durch die Differenz d₁₀ (b) - d₉₀ (a)).

Die erfindungsgemäße Wirkung ist umso überraschender, als feinteiliger Kautschuk die Schlagzähigkeit von thermoplastischen Polyestern nur mäßig anhebt und grobteiliger Kautschuk zu einem kontinuierlichen Abfall der Zähigkeit der Formmasse mit absinkender Temperatur führt.

Die Pfropfprodukte B umfassen Pfropfpolymerisate mit kautschukelastischen Eigenschaften, die durch Aufpfropfen von Vinylmonomeren aus der Reihe Styrol, Acrylnitril, Methylmethacrylat auf teilchenförmige, wenigstens partiell vernetzte Dienkautschuke und/oder Alkylacrylatkautschuke erhalten werden.

Bevorzugte Pfropfmonomere sind Methylmethacrylat sowie Mischungen aus Styrol und Methylmethacrylat bzw. Styrol und Acrylnitril.

Dienkautschuke sind teilchenförmige, vernetzte Homo- und/oder Copolymerisate aus konjugierten C₄-C₆-Dienen. Bevorzugtes Dien ist Butadien-1,3. Die Diencopolymerisate können neben den Dienresten bis zu 30 Gew.-%, bezogen auf das Copolymerisat, Reste anderer ethylenisch ungesättigter Monomerer, wie z.B. Styrol, Acrylnitril, Ester der Acryl- oder Methacrylsäure mit einwertigen Alkoholen mit 1 bis 4 C-Atomen, wie z.B. Methylacrylat, Ethylacrylat, Methylmethacrylat, Ethylmethacrylat enthalten.

Die Herstellung der Dienkautschuk-Pfropfgrundlage und der Pfropfpolymerisate ist bekannt und wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage, Bd. 19, Verlag Chemie 1981, S. 279 bis 284 beschrieben.

Alkylacrylatkautschuke sind teilchenförmige, vernetzte Alkylacrylat-Polymere, die durch Polymerisation von Estern aus Acrylsäure und einwertigen Alkoholen mit 1 bis 8 C-Atomen erhalten werden. Die Polymerisate können auch Copolymerisate der Acrylsäureester mit bis zu 40 Gew.-% anderer Vinylmonomerer, wie Styrol, Acrylnitril, Methylmethacrylat, Vinylester, Vinylether sein.

Die Alkylacrylatkautschuke sind vernetzt, z.B. durch Einpolymerisieren polyfunktioneller, vernetzend wirkender, copolymerisierbarer olefinisch ungesättigter Comonomerer. Zur Vernetzung können Monomere mit mehr als einer polymerisierbaren Doppelbindung copolymerisiert werden. Bevorzugte Beispiele für vernetzende Monomere sind Ester ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat und -isocyanurat; Tris-acryloyl-s-triazine; insbesondere Trialkylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Tris-acryloythexahydro-s-triazin, Triallylbenzole.

Die Menge der vernetzenden Monomeren beträgt vorzugsweise 0,02 bis 5, insbesondere 0,05 bis 2 Gew.-%, bezogen auf die Kautschuk-Pfropfgrundlage.

Bei cyclischen, vernetzenden Monomeren mit mindestens drei ethylenisch ungesättigten Gruppen ist es vorteilhaft, nicht mehr als 1 Gew.-%, bezogen auf Kautschuk-Pfropfgrundlage, zu verwenden. Alkylacrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Hülle enthalten.

Der Anteil des Polydien-Kerns in solchen mehrschaligen Kautschuken kann 0,1 bis 80, bevorzugt 10 bis 50 Gew.-% betragen. Schäle(n) und Kern können unabhängig voneinander teilvernetzt oder hochvernetzt sein.

Die Dienkautschuke und die Alkylacylatkautschuke liegen als Teilchen eines mittleren Durchmessers d₅₀ im Bereich von 0,05 bis 1 µm vor und sind wenigstens partiell vernetzt. Sie besitzen Gelgehalte > 50, vorzugsweise _{>}80, insbesondere _{>} 90 Gew.-%.

Der mittlere Teilchendurchmesser d kann bestimmt werden mittels Ultrazentrifugen-Messungen (W. Scholtan, H. Lange, Kolloid. Z. und Z. Polymere 250 (1972), 782-796) oder mittels Elektronenmikroskopie und anschließender Teilchenauszählung (G. Kämpf, H. Schuster, Angew. Makromolekulare Chemie 14 (1970), 111-129).

Werden die Teilchenverteilungen mittels Elektronenmikroskopie und anschließender Teilchenauszählung ermittelt, so fallen dabei Zahlenmittel (und nicht Gewichtsmittel) an. So ermittelte Zahlenmittel müssen dann allerdings in Gewichtsmittel umgerechnet werden, damit sie mit den hier angegebenen Werten dₗₒ, dso. dgo vergleichbar sind. Diese Umrechnung gelingt z.B. nach W. Scholtan und H. Lange und liefert für beide Methoden gut übereinstimmende Werte. Weiterhin sei auf DIN 53 206 hingewiesen, wo Umrechnungen von Teilchengrößenverteilungen definiert sind.

Bei den in dieser Anmeldung angegebenen mittleren Teilchengrößen handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als dso-Wert der integralen Massenverteilung bezeichnet wird, ist dabei als der Teilchendurchmesser definiert, bei dem 50 Gewichtsprozent der Teilchen einen gleichen oder kleineren Durchmesser haben als der Durchmesser, der dem d₅₀-Wert entspricht. Zur Charakterisierung der Breite der Teilchengrößenverteilung der Kautschukteilchen werden neben dem d₅₀-Wert (mittlerer Teilchendurchmesser) die sich aus der integralen Massenverteilung ergebenden dᵢₒ-und dgₒ-Werte herangezogen. Die d₁₀- bzw. doo-Werte der integralen Massenverteilung sind dabei entsprechend dem dso-Wert definiert mit dem Unterschied, daß sie auf 10 bis 90 Gew.-% der Teilchen bezogen sind. Der Quotient 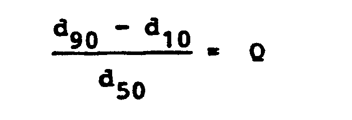 stellt ein Maß für die Verteilungsbreite der Teilchengröße dar.

Die Differenz d₁₀ (b) - d₉₀ (a) stellt dann ein Maß für die Überlappung der Kurven dar: Ist die Differenz positiv, so liegt keine oder nur eine geringfügige Kurvenüberlappung vor; ist die Differenz negativ, so ist eine Kurvenüberlappung vorhanden, deren Ausmaß durch die Größe des negativen Wertes beschrieben wird.

Man kann man auch die Zahlenmittelverteilung der Kautschukteilchen ermitteln und anschließend in Gewichtsmittel umrechnen. Die mikroskopische Auszählmethode gemäß G. Kämpf et al. ist um so genauer, je mehr Teilchen ausgezählt werden; normalerweise sollten wenigstens 10⁴ Teilchen vermessen werden, die dann nach statistischer Auswertung eine Teilchengrößenzahlenmittelverteilungskurve liefern. Mann kann dabei beispielsweise die Teilchengrößenklassen gerade so groß wählen, daß 90 % der Teilchen auf nicht weniger, aber auch nicht mehr als 20 Klassen verteilt sind.

Dabei bleibt nachzutragen, daß die Kautschukteilchen in den Formmassen in gepfropftem Zustand vorliegen; man könnte somit vermuten, daß durch die Pfropfung die Kautschukteilchengröße verändert wurde, verglichen mit den in den Kautschuklatices (zur Herstellung von B) vorliegenden Kautschukteilchen. Es hat sich allerdings gezeigt, daß die Pfropfung sowie die Pfropfhüllenmenge gemäß den hier beschriebenen Kennzeichen die Kautschukteilchengröße praktisch kaum beeinflußt, so daß im Rahmen der Vergleichbarkeit an Formmassen ermittelte Verteilungskurven mit an Latex ermittelten Verteitungskurven verglichen werden können.

Der Gelgehalt der Dienkautschuke wird bestimmt bei 25°C in Toluol, der Gelgehalt der Alkylacrylatkautschuke bei 25°C in Demethylformamid (M. Hoffmann, H. Krömer, R. Kuhn, Polymeranalytik 1 und II, Georg Thieme Verlag Stuttgart 1977)

Bevorzugte gepfropfte Alkylacrylatkautschuke sind solche, die
a) mit cyclischen trifunktionellen Comonomeren, wie Triallylcyanurat oder Triallylisocyanurat, vernetzt sind (beschrieben in DE-OS 3 039 114);
b) einen Polybutadien-Kern enthalten (beschrieben in DE-OS 3 039 115);
c) hergestellt wurden in Abwesenheit von Suspendiermittel (beschrieben in DE-OS 3 117 052).

Welcher Kautschukgehalt am günstigsten zur Herstellung der erfindungsgemäßen Formmassen ist, hängt u.a. von dem jeweiligen Kautschuk-Teilchendurchmesser und von der Pfropfdichte ab.

Kautschuke mit den erfindungsgemäßen Teilchendurchmessern können durch Emulsionspolymerisation geeigneter Monomerer erhalten werden. In den dazu bekannten Emulsionspolymerisations-Verfahren lassen sich die Latex-Teilchendurchmesser durch Wahl der Verfahrensbedingungen einstellen, z.B. durch Art und Konzentration des Emulgators, Teilchenagglomerisation, Elektrolyte, Temperatur, Monomer/Polymer-Konzentration.

Bei der Herstellung der Pfropfprodukte B durch Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren. Die Menge dieses ungepfropften Polymerisats kann durch den Pfropfgrad bzw. die Pfropfausbeute charakterisiert werden. Diese hängt unter anderem von den Polymerisationsbedingungen, der Zusammensetzung der Kautschuk-Pfropfgrundlage, der Größe der zu pfropfenden Teilchen und der Menge an gepfropfter Kautschuk-Pfropfgrundlage ab.

Die erfindungsgemäßen Formmassen weisen optimale Eigenschaften auf, wenn die Menge an freiem (Co)Polymerisat der Pfropfmonomeren bestimmte Grenzen nicht übersteigt. Diese obere Grenze liegt bei 15 Gew.-%, vorzugsweise bei 10 Gew.-%, insbesondere bei 7 Gew.-%, bezogen auf die Formmasse aus A + B. Der Staudinger

Index [η] dieser freien (Co)-Polymerisate beträgt ≤ 0,6 dl/g, vorzugsweise ≤ 0,4 dl/g, gemessen in Dimethylformamid bei 25°C.

Zur Erzielung bestimmter technologischer Eigenschaften kann es vorteilhaft sein, die Polymerisate der Pfropfmonomeren auch getrennt herzustellen und den Formmassen während der Herstellung zuzumischen. Man kann aber auch so verfahren, daß separat hergestelltes Polymerisat der Pfropfmonomeren während der Pfropfcopolymerisation anwesend ist. Es ist auch möglich, gegebenenfalls überschüssiges Polymerisat der Pfropfmonomeren aus den Pfropfprodukten B abzutrennen. Welcher Weg beschritten wird, hängt vom gewählten Polymerisationsverfahren, von der Art der jeweiligen Kautschuk-Pfropfgrundlage, von Art und Menge der Pfropfmonomeren sowie von den gewünschten technologischen Eigenschaften der Formmassen ab.

Der Fachmann kann die Pfropfpolymerisation der Pfropfmonomeren auf die Kautschukteilchen so durchführen und steuern, daß die erfindungsgemäß erforderlichen Pfropfprodukt-Zusammensetzungen gebildet und gleichzeitig die gegebenenfalls erforderlichen Pfropfmonomerpolymerisat-Gehalte erzeugt werden.

Solche speziellen Polymerisate, bestehend aus Pfropfpolymerisaten in Mischung mit geeigneten Pfropfmonomerpolymerisaten, können dann direkt zur Herstellung der Formmassen eingesetzt werden. In solchen Fällen sind natürlich die Pfropfastpolymeren chemisch weitgehend identisch mit den Pfropfmonomerpolymerisaten.

Die "bimodalen" Pfropfprodukte B lassen sich nach verschiedenen Verfahren herstellen. So kann man sie so herstellen, daß man eine Dispersion feinteiliger Kautschukteilchen (entsprechend a) mit Monomeren bepfropft, diese Pfropfpolymeremulsion dann mit einer getrennt erzeugten Pfropfpolymeremulsion grobteiliger Kautschukteilchen abmischt und anschließend diese Mischung aufarbeitet.

Man kann auch die Kautschukteilchendispersionen (Latices) mischen und auf dieses Gemisch die Pfropfmonomeren, insbesondere in wäßriger Emulsion mittels Radikale bildender Systeme, pfropfpolymerisieren und dann in bekannter Weise aufarbeiten.

Man kann aber auch feinteilige Pfropfprodukte und grobteilige Pfropfprodukte getrennt herstellen, abmischen und anschließend diese Mischung aufarbeiten.

Nach dem bevorzugten Verfahren werden die Mischungen aus Kautschukteilchendispersionen der erfindungsgemäßen bimodalen Teilchenverteilung mit Pfropfmonomeren bepfropft, insbesondere in wäßriger Emulsion mittels Radikale bildender Systeme, und dann in der bekannten Weise aufgearbeitet.

Man kann aber auch feinteilige Pfropfprodukte und grobteilige Pfropfprodukte getrennt herstellen und in Mengen entsprechend der erfindungsgemäßen Zusammensetzung a/b mit den thermoplastischen Polyestern zur Herstellung der erfindungsgemäßen Formmassen abmischen.

Bei den Verfahren der getrennten Pfropfung und gemeinsamen Aufarbeitung des Pfropfproduktes einerseits und bei der getrennten Herstellung von feinteiligem und grobteiligem Pfropfprodukt andererseits ist es auch möglich, Pfropfprodukte mit unterschiedlichem Aufbau der feinteiligen und der grobteiligen Komponente zu verwenden.

Diese Verfahren sind somit bevorzugt.

Thermoplastische polyester A im Sinne der Erfindung sind Kondensationsprodukte aus aromatischen Dicarbonsäuren (oder deren Derivaten) und aliphatischen, cycloaliphatischen, araliphatischen oder aromatischen Diolen und Mischungen dieser Reaktionsprodukte.

Thermoplastische Polyester A aus aromatischen Dicarbonsäuren und aromatische Diolen sind bevorzugt Kondensationsprodukte aus Terephthalsäure und Isophthalsäure (oder deren Derivaten) und Diphenolen der allgemeinen Formel: 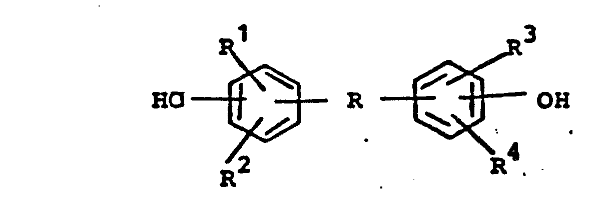 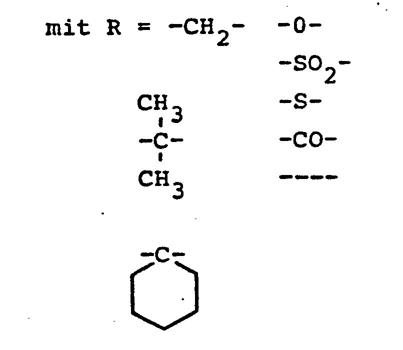 R¹, R², R³. R⁴ = Alkylgruppe mit 1-4 C-Atomen, H.

Bevorzugtes Diphenol ist 2,2-Bis-(4-hydroxyphenyl)-pro-pan.

Thermoplastische Polyester A aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte sind bevorzugt Polyalkylenterephthalate.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butan-diol-1,4-reste. Sie können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, z.B. Reste von Phthalsäure, Isophthalsäuren, Naphthalin-2,6-dicarbonsäure, 4,4'-Diphenyldicarbonsäure, Bernstein-, Adipin-, Sebacinsäure, Azelainsäure, Cyclohexandiessigsäure.

Neben Ethylenglykol- bzw. Butandiol-1,4-resten können sie bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpen-tandiol-2,4, 2-Methylpentandiol-2,4, 2,2,4-Trimethyl-pentandiol-1,3 und -1,6, 2-Ethylhexandiol-1,3, 2,2-Diethylpropandiol-1,3, Hexandiol-2,5, 1,4-Di-(ß-hydro-xyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan und 2,2-Bis-(4-hydroxy-propoxyphenyl)-propan (DE-OS 24 07 674, 24 07 776, 27 15 932).

Die Polyalkylenterephthalalte können durch Einbau relativ kleiner Mengen 3- oder 4-wertiger Alkohole oder 3-oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und/oder deren reaktionsfähigen Derivaten (z.B. deren Dialkylestern) und Ethylenglykol oder Butandiol-1,4 hergestellt worden sind, Mischungen dieser Polyalkylenterephthalate sowie Copolyester, die aus mindestens zwei der obengenannten Säurekomponenten und/oder aus mindestens zwei der obengenannten Alkoholkomponenten hergestellt sind; besonders bevorzugte Copolyester sind Poly-ethylenglykol/butandiol-1,4-terephthalate.

Ganz besonders geeignete Polyalkylenterephthalate besitzen eine Intrinsic-Viskosität von 0,4 bis 1,5 dl/g, vorzugsweise 0,5 bis 1,4 dl/g, insbesondere 0,6 bis 1,3 dl/g, jeweils gemessen in Phenol/o-Dichlorbenzol (1:1 Gew.-Teile) bei 25°C im Ubbelohde-Viskosimeter.

Thermoplastische Polyester A sind auch solche, die als Diolkomponente langkettige Diole enthalten. Bevorzugte langkettige Diole sind Dihydroxypolyethylenoxide der Brutto-Formel HO(CH₂CH₂0)ₙH und Dihydroxytetrahydrofurane der Formel HO(CH₂CH₂CH₂CH₂0)ₘH.

Das mittlere Molekulargewicht (Zahlenmittel) der langkettigen Diole liegt im allgemeinen zwischen 500 und 5.000, bevorzugt zwischen 1.000 und 3.000 (und n ist somit ca. 10 - 100, bevorzugt ca. 25 - 60; m ca. 7 - 70, bevorzugt 14 - 40).

Bevorzugte Polyester mit langkettigen Diolen enthalten als Säurekomponente Terephthalsäure und/oder Isophthalsäure und als Diolkomponente Dihydroxytetrahydrofuran und Butandiol, wobei der Gehalt an einkondensierten langkettigen Diol-Einheiten im allgemeinen unter 60 Gew.-% liegt, bezogen auf den Gesamtgehalt an einkondensierten Diol-Einheiten.

Je nach den gewünschten Eigenschaften können die thermoplastischen Polyester einzeln oder in Mischungen miteinander eingesetzt werden.

Bevorzugte Mischungen enthalten Polyethylenterephthalat und Polybutylenterephthalat mit
1 - 99, bevorzugt 10 - 60, insbesondere 20 - 50, Gew.-% Polyethylenterephthalat, und
99 - 1, bevorzugt 90 - 40, insbesondere 80 - 50, Gew.-% Polybutylenterephthalat.

Für bestimmte Eigenschaften können bis zu 80 Gew.-%, bevorzugt bis zu 60 Gew.-%, besonders bevorzugt bis zu 40 Gew.-%, bezogen auf A, der thermoplastischen Polyester aromatische Polycarbonate sein.

Unter aromatischen Polycarbonaten im Sinne dieser Erfindung werden Homopolycarbonate, Copolycarbonate und Mischungen dieser Polycarbonate verstanden, denen z.B. mindestens eines der folgenden Diphenole zugrundeliegt:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis₋(hydroxyphenyl)-sulfoxide,
Bis-(hydroxyphenyl)-sulfone,
a,a'-Bis-(hydroxyphenyl)-diisopropylbenzole
sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1 570 703, 2 063 050, 2 063 052, 2 211 956, 2 211 957. der FR-PS 1 561 518 und in der Monographie von H. Schnell "Chemistry and Physics of Polycarbonates", Interscience Publishers, New York, 1964, beschrieben.
Bevorzugte Diphenole sind z.B.
4,4'-Dihydroxydiphenyl,
2,4-Bis-(4-hydroxyphenyl)-2-methylbutan,
a,a'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.
Besonders bevorzugte Diphenole sind z.B.
2,2-Bis-(4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
2,2-Bis-(3,5-dimethyl-4-hydroxyphenyl)-propan.

Die aromatischen Polycarbonate können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxygruppen, verzweigt sein.

Die aromatischen Polycarbonate sollen in der Regel mittlere Molekulargewichte M_{w} von 10.000 bis über 200.000, vorzugsweise von 20.000 bis 80.000 haben, ermittelt durch Messungen der relativen Viskosität in Dichlormethan bei 25°C und einer Konzentration von 0,5 Gew.-%.

Den hochmolekularen Polycarbonaten mit M_{w} von 10.000 bis 200.000 können auch kleine Anteile niedermolekularer Polycarbonate, z.B. mit einem mittleren Polykondensationsgrad von 2 bis 20, zugemischt sein.

Zur Einstellung des Molekulargewichtes M_{w} der Polycarbonate werden in bekannter Weise Kettenabbrecher, wie beispielsweise Phenol, Halogenphenole oder Alkylphenole in den berechneten Mengen eingesetzt.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbpigmente und/oder Farbstoffe enthalten.

Die gefüllten bzw. verstärkten Formmassen können bis zu 60 Gew.-%, bezogen auf die verstärkte Formmasse. Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Es kommen alle bekannten Flammschutzmittel infrage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z.B. Antimontrioxid.

Die Herstellung der Formmassen kann in den üblichen Mischaggregaten, wie Walzen, Knetern, Ein- und Mehrwellenextrudern, erfolgen.

Wenn auch in den meisten Fällen sämtliche Harzkomponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen.

So können die erfindungsgemäßen Formmassen auf den genannten Mischaggregaten hergestellt werden, indem die beiden Komponenten A und B gemeinsam aufgeschmolzen und homogenisiert werden oder indem das Pfropfprodukt B in die Schmelze des thermoplastischen Polyesters A eingearbeitet wird.

Die Temperatur bei der Herstellung der Mischungen sollte mindestens 10°C und zweckmäßig höchstens 90° C oberhalb des Schmelzpunktes des Polyesters liegen.

Die erfindungsgemäßen Formmassen zeichnen sich durch eine verbesserte Zähigkeit aus. Ein herausragendes Merkmal ist die Verbesserung der Zähigkeit bei tiefen Temperaturen.

Entsprechend dem Eigenschaftsprofil eignen sich die erfindungsgemäßen Formmassen überall im Spritzguß-und Extrusionssektor dort, wo Formteile hohen Stoßbelastungen ausgesetzt sind, z.B. im Kfz-Bereich für Stoßfänger, Spoiler, Rammleisten, Karosserieteile, Lenkräder, Lenkradsäulen.

Die nachfolgenden Beispiele erläutern die Erfindung.

### Beispiele

### A) Verwendete Komponenten

1 Polybutylenterephthalat mit einer Intrinsic-Viskosität von 1,18 dl/g, gemessen in Phenol/o-Dichlorbenzol (Gew.-Verhältnis 1:1) bei 25°C im Ubbelohde-Viskosimeter.
II Polyethylenterephthalat mit einer Intrinsic-Viskosität von 0,82 dl/g, gemessen wie I.
III Polycarbonat aus Bisphenol A, Phenol und Phosgen, relative Viskosität 1.285, gemessen in Dichlormethan bei 25°C in 0,5 gew.-%-iger Lösung im Ubbelohde-Viskosimeter.

### IV Gepfropfter Polybutandienkautschuk

### IV.1 Herstellung von Polydienlatices

IV 1.1 In einem Reaktor wird unter Rühren folgende Emulsion bei 65°C bis zum praktisch vollständigen Monomerumsatz innerhalb von ca. 22 Stunden polymerisiert:
100,0 Gew.-Teile Butadien,
1,8 Gew.-Teile Na-Salz der disproportionierten Abietinsäure,
0,257 Gew.-Teile Natriumhydroxid,
0,3 Gew.-Teile n-Dodecylmercaptan,
1,029 Gew.-Teile Na-ethylendiamintetraacetat,
0,023 Gew.-Teile Kaliumpersulfat und
176 Gew.-Teile Wasser.

Es wird ein Latex erhalten, der Butadienpolymerisatteilchen eines mittleren Durchmessers (d₅₀) von 0,1 µm in einer Konzentration von ca. 35 - 36 Gew.-% enthält. Die Polybutadienteilchen besitzen Gelgehalte von 90 - 95 Gew.-% (gemessen in Toluol bei 23°C).

IV 1.2 Nach Vorschrift IV 1.1 wird bei 60 - 68°C innerhalb von ca. 110 Stunden folgende Emulsion polymerisiert:
100,0 Gew.-Teite Butadien,
70 Gew.-Teile Wasser,
1,146 Gew.-Teile Na-Salz der disproportionierten Abietinsäure,
0,055 Gew.-Teile Na-ethylendiamintetraacetat,
0,137 Gew.-Teile Natriumhydroxid,
0,028 Gew.-Teile Natriumhydrogencarbonat und
0,282 Gew.-Teile Kaliumpersulfat.

Es wird ein Latex erhalten, der Polybutadienteilchen eines mittleren Durchmessers (d₅₀) von 0,4 µm in einer Konzentration von ca. 58 Gew.-% enthält. Die Polybutadienteilchen besitzen Gelgehalte von 90 - 91 Gew.-% (gemessen in Toluol bei 23°C).

IV 1.3 Polybutadienlatex, hergestellt durch Emulsionspolymerisation mittels Na-Salz der disproportionierten Abietinsäure als Emulgator und Kaliumpersulfat als Initiator, wobei die Polymeri-sation nach bekannten Maßnahmen so durchgeführt wird, daß ein feinteiliger Latex mit einer breiten Teilchenverteilung resultiert. d₅₀-Wert der Latexteilchen = 0,11 µm. Die Polybutadienteilchen besitzen Gelgehalte von 93 Gew.-% (gemessen analog IV 1.1).

IV 1.4 Polybutadienlatex, hergestellt unter Zusatz der in IV 1.3 beschriebenen Hilfsstoffe. Es wird ein grobteiliger Latex mit breiter Teilchenverteilung gebildet: dso-Wert der Latexteilchen = 0,39 µm. Die Polybutadienteilchen besitzen Gelgehalte von 90 Gew.-% (gemessen analog IV 1.1).

### 1.5 Verteilungscharakteristiken der Kautschuklatices IV 1.1 bis IV 1.4:

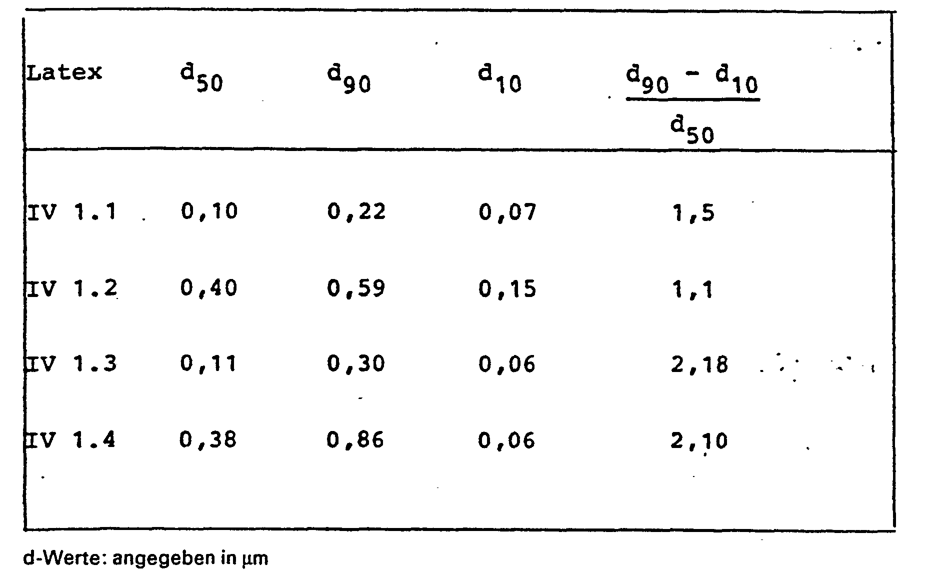

### IV.2 Herstellung von Pfropfprodukten

In einem Reaktor werden unter Rühren bei 65°C a Gew.-Teile Polydienlatex und b Gew.-Teile Wasser vorgelegt. Nach Initiierung mit c Gew.-Teilen Kaliumpersulfat werden 100 Gew.-Teile Styrol/ Acrylnitril-Mischung (im Mischungsverhältnis 72:28) und separat eine Mischung aus d Gew.-Teilen Wasser, e Gew.-Teilen Na-Salz der disproportionierten Abietinsäure und f Gew.-Teilen In-Natronlauge innerhalb von mehreren Stunden zudosiert. Anschließend läßt man bis zu einem Endumsatz von >98 Gew.-% bei Temperaturen von 65 bis 75°C auspolymerisieren. Die Mengenangaben zu diesen Pfropfpolymerisationen sind in folgender Tabelle wiedergegeben:

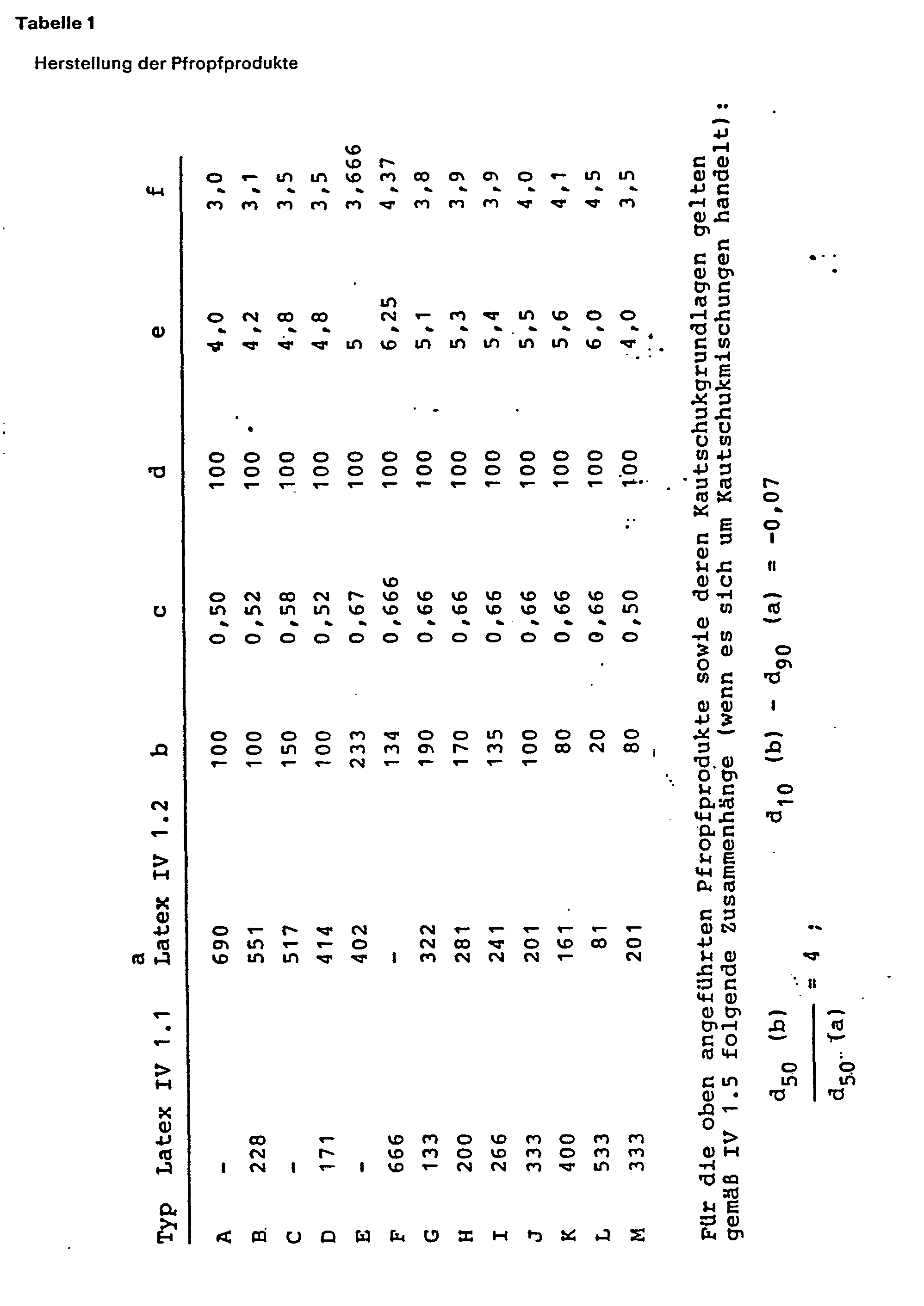

### Vergleichspfropfprodukte

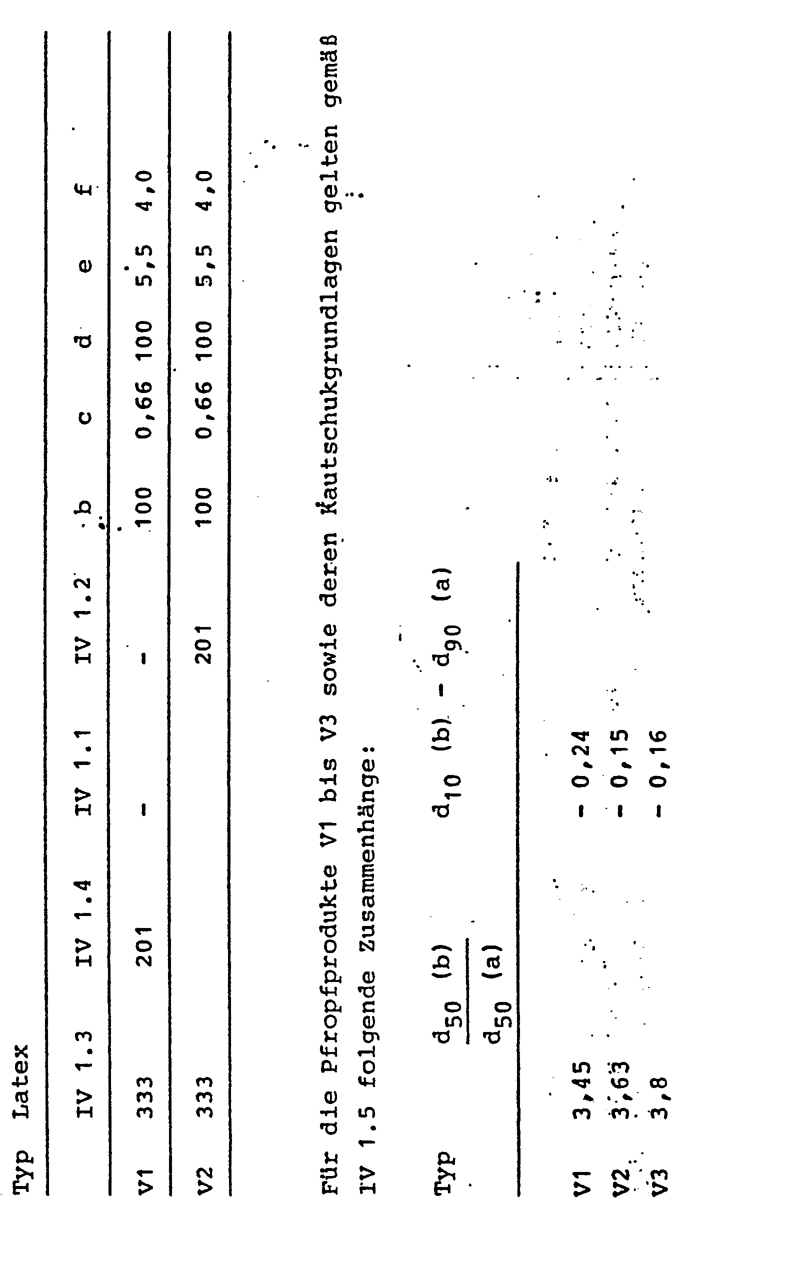

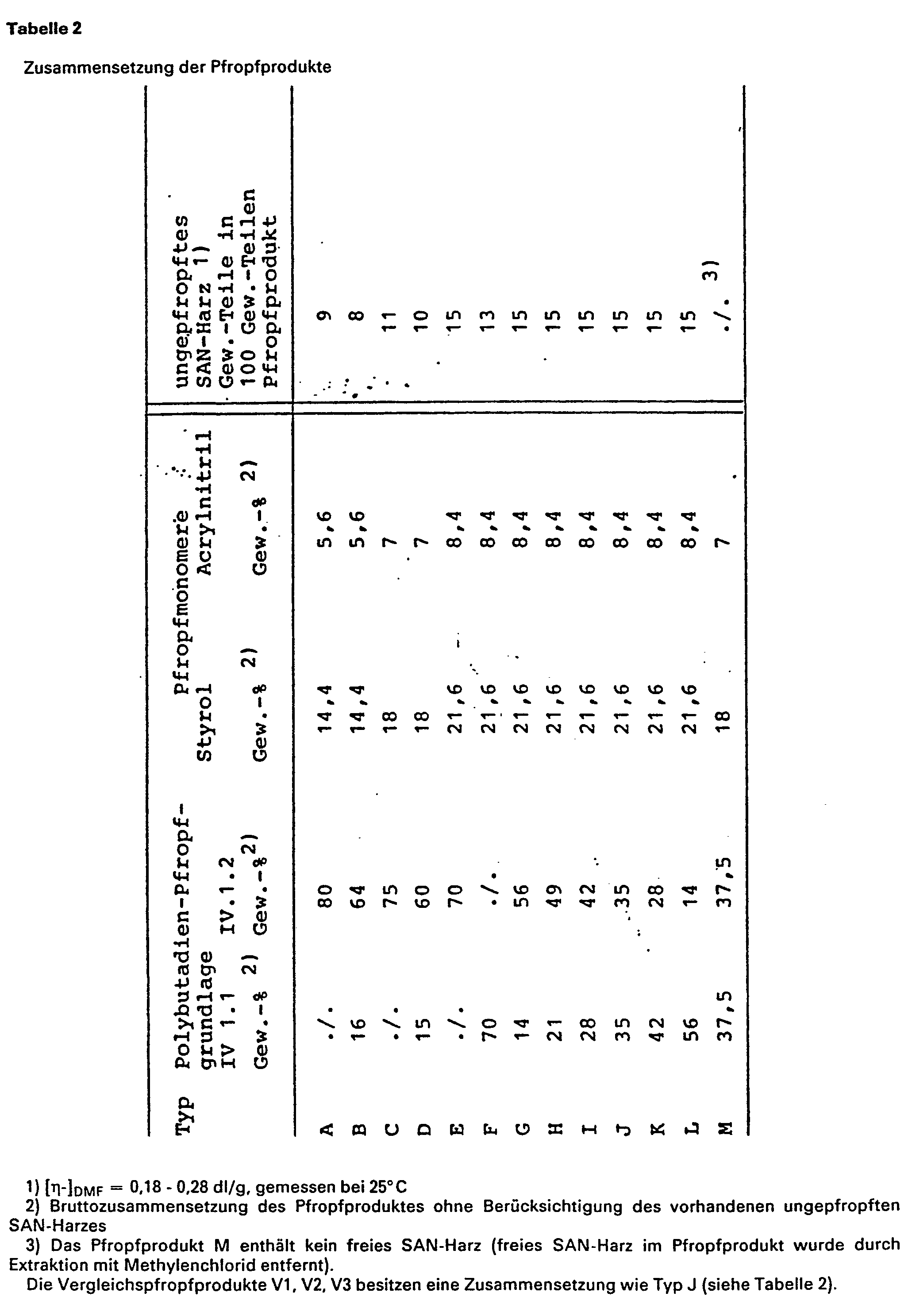

### V Gepfropfter Polyacrylatkautschuk

### VI Feinteiliger Acrylatkautschuk

In einem Reaktor werden vorgelegt:
1.030 Gew.-Teile Wasser und
5 Gew.-Teile Natrium-Salz von C₁₄-C₁₆-Alkylsulfon-säuren.
Bei 70°C werden 80 Gew.-Teile der Lösung 1 (s.u.) eingespeist. Anschließend initiiert man durch Zugabe von 5 Gew.-Teilen Kaliumperoxidisulfat in 100 Gew.-Teilen Wasser. Danach werden folgende Lösungen dosiert:
Lösung 1: 995 Gew.-Teile n-Butylacrylat und
5 Gew.-Teile Triallylcyanurat
(80 Gew.-Teile dieser Lösung wurden bereits in die Vorlage gegeben, der Rest der Lösung wird nach Initiierung dosiert!)
Lösung 2:20 Gew.-Teile Natrium-Salz von C₁₄-C₁₈-Alkyl-sulfonsäuren und
700 Gew.-Teile Wasser.

Nach Zudosierungen der Lösungen 1) und 2) in 5 Stunden bei 70°C wird 4 Stunden bei 70°C nachpolymerisiert. Es entsteht ein Latex mit einem Feststoff-Gehalt von 35 Gew.-%. Die Latex-Teilchengröße beträgt 0,09 um (Latex V1).

### V2 Grobteiliger Acrylatkautschuk

Gearbeitet wird mit folgenden Lösungen:
Vorlage 1: 12,4 Gew.-Teile Latex IV 1.1 und
313 Gew.-Teile Wasser,
Vorlage 2: 0,82 Gew.-Teile Kaliumperoxidisulfat und
20 Gew.-Teile Wasser,
Zulauf 1: 629 Gew-Teile, n-Butylacrylat und
1 Gew.-Teil Triallylcyanurat,
Zulauf 2: 700 Gew.-Teile Wasser und
5,9 Gew.-Teile Natrium-Salz von C₁₄-C₁₆-Alkylsulfonsäuren.

Bei 65 - 68°C wird Vorlage 1 aufgeheizt, dann speist man 24 Gew.-Teile von Zulauf 1 ein. Nach Initiierung mit Vorlage 2 wird der Rest von Zulauf 1 und Zulauf 2 innerhalb von 5 Stunden zudosiert. Anschließend rührt man 4 Stunden nach.

Der Latex besitzt einen Feststoffgehalt von 37 Gew.-%. Die Latex-Teilchengröße beträgt 0,5 µm (Latex V2). Das Polymerisat besitzt einen Gelgehalt von 93 Gew.-% und einen Quellindex 1) von 8, gemessen in DMF bei 23° C.

¹) Definition des Quellindex: s. M. Hoffmann, H. Krömer, R. Kuhn, Polymeranalytik I und II, Georg Thieme Verlag Stuttgart 1977

### V3 Herstellung der Pfropfprodukte aus Acrylatkautschuk und Styrol/Acrylnitril-Gemisch

Allgemeine Vorschrift:
In einem Reaktor wird mit folgenden Lösungen bzw. Latices polymerisiert.
Vorlage 1: Latex V. 1 bzw. Latex V. 2 A Gew.-Teile,
Vorlage 2: Kaliumperoxidisulfat 2 Gew.-Teile,
Wasser 120 Gew.-Teile,
Zulauf 1: Styrol 219 Gew.-Teile,
Acrylnitril 85 Gew.-Teile,
Zulauf 2: Natrium-Salz von C₁₄-C₁₆
Alkylsulfonsäuren 6 Gew.-Teile,
Wasser 396 Gew.-Teile.

Bei 65°C wird in die Vorlage 1 die Vorlage 2 eingespeist,danach dosiert man Zulauf 1 und Zulauf 2 innerhalb. von 4 Stunden bei 65°C zu. Anschließend läßt man 4 Stunden bei 65°C auspolymerisieren (Latex V.3).

Die Pfropfpolymer-Latices werden wie folgt weiterbehandelt:
Vorlage 3: Wasser 5.525 Gew.-Teile,
MgS0₄xH₂0 (Bittersalz) 107 Gew.-Teile,
Zulauf 3: Latex V.3 B Gew.-Teile,
Zulauf 4: Styrol 112 Gew.-Teile,
Acrylnitril 44 Gew.-Teile,
Aktivator: Kaliumperoxidisulfat 1,3 Gew.-Teite,
Wasser 78 Gew.-Teile.

Unter gutem Rühren wird Vorlage 3 auf 70 - 73°C aufgeheizt. Innerhalb von 1 Stunde dosiert man den Zulauf 3 hinzu. Dann fügt man den Zulauf 4 innerhalb von 30 Minuten hinzu und aktiviert anschließend mittels der Aktivator-Lösung. Man heizt auf 80°C auf, rührt 2 Stunden, heizt auf 90°C auf und rührt nochmals 2 Stunden. Nach anschließender Stabilisierung mit 2 Gew.-Teilen phenolischen Antioxidantien wird über Filtration, Waschung und Trocknung zu einem Pulver aufgearbeitet.

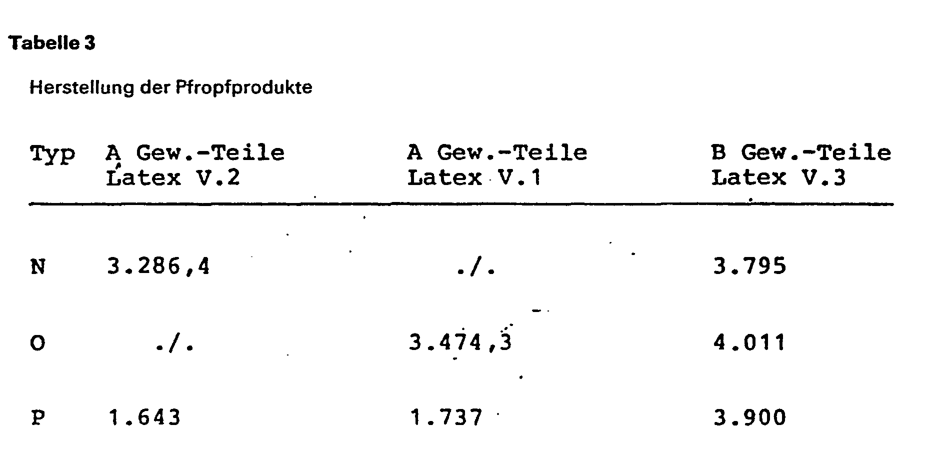

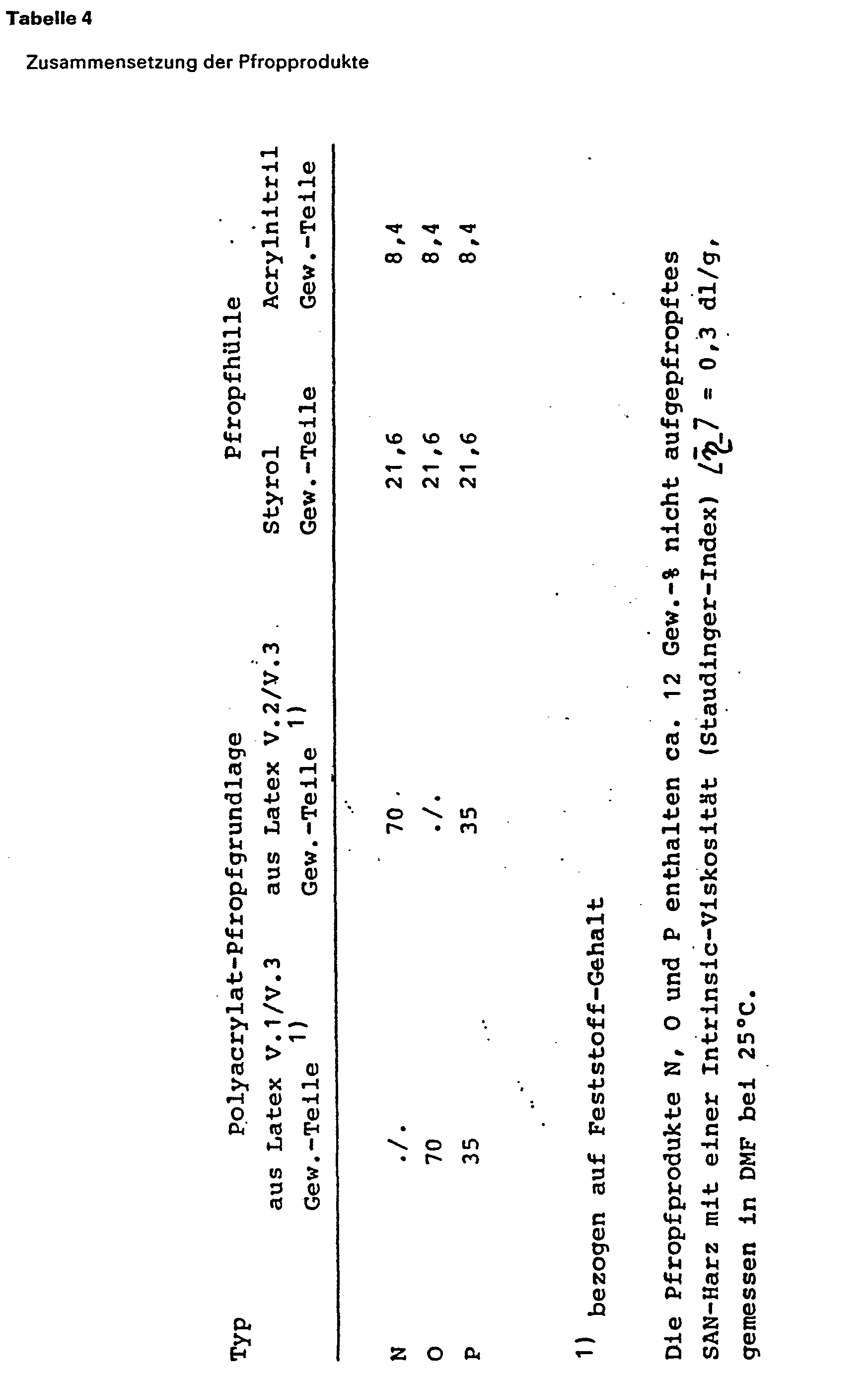

### VI Vinylmonomer-Copolymerisat

Copolymerisat aus 72 Gew.-% Styrol und 28 Gew.-% Acrylnitril mit einer Intrinsic-Viskosität [µ] = 0,2 dl/g (gemessen in DMF im Ubbelohde-Viskosimeter bei 25°C).

### B) Herstellung und Prüfung der Formmassen

### Beispiele 1-26

Auf einem kontinuierlich arbeitenden Zweiwellenextruder wurden die Komponenten aufgeschmolzen und homogenisiert. Die Zylindertemperaturen wurden so gewählt, daß die in den Tabellen 5 - 7 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer üblichen Spritzgußmaschine Normkleinstäbe hergestellt. Geprüft wurde die Kerbschlagzähigkeit (nach DIN 53453) bei den angegebenen Temperaturen.

### Beispiele 27-29

Analog den Versuchen 1 - 26 wurde das Pfropfprodukt mit geschmolzenem Polybutylenterephthalat auf einem Extruder gemischt. Anschließend wurden in die gemischte Schmelze Schnittglasfasern von 6 mm Länge eindosiert und homogen verteilt. Nach dem Entgasen der Schmelze vor der Düse, dem Austragen des Schmelzestranges in Wasser, Granulieren und Trocknen wurden Normkleinstäbe wie vorher beschrieben hergestellt. Geprüft wurde die Schlagzähigkeit und Kerschlagzähigkeit bei verschiedenen Temperaturen (nach DIN 53 453). Ergebnisse siehe Tabelle 8.

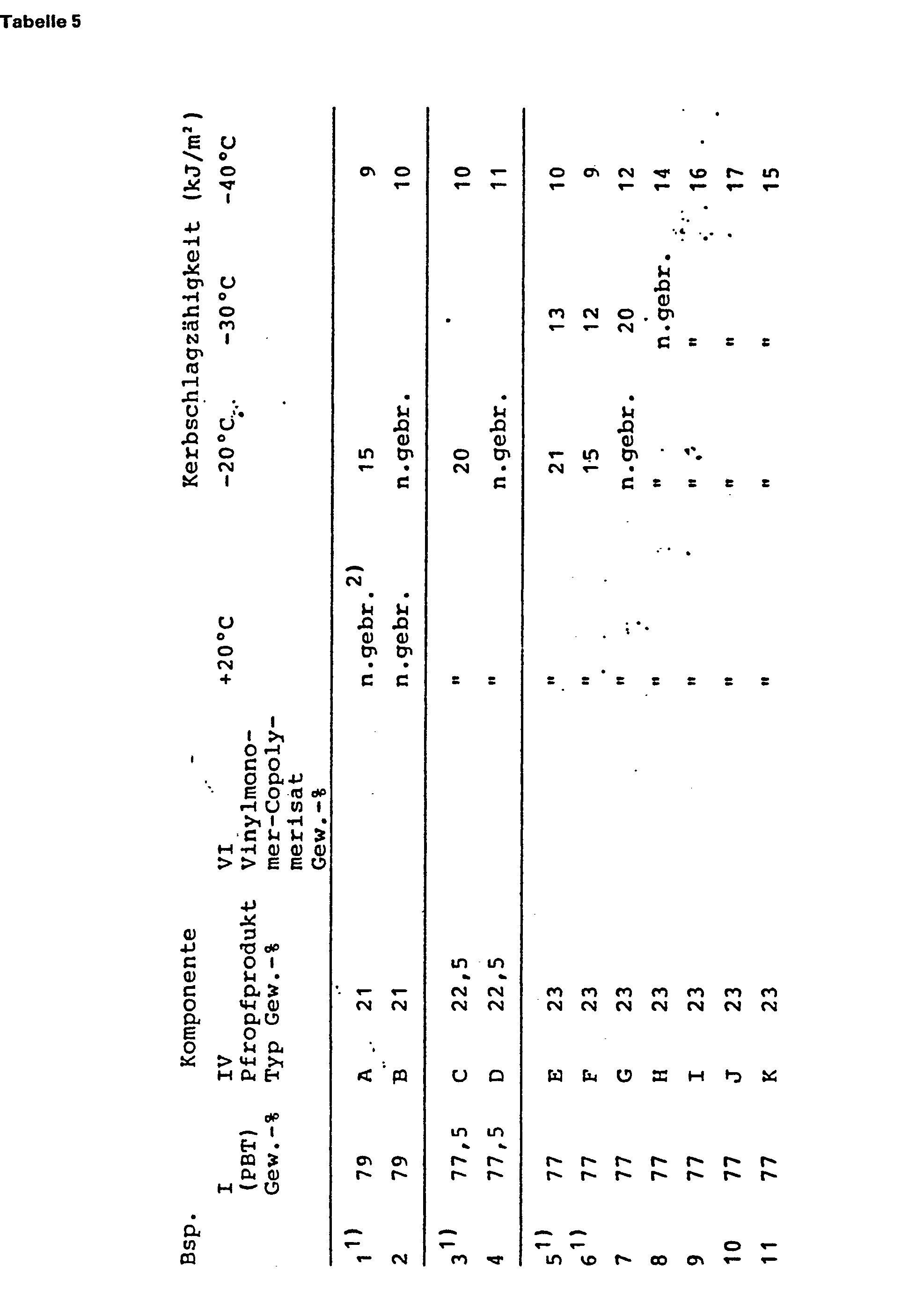

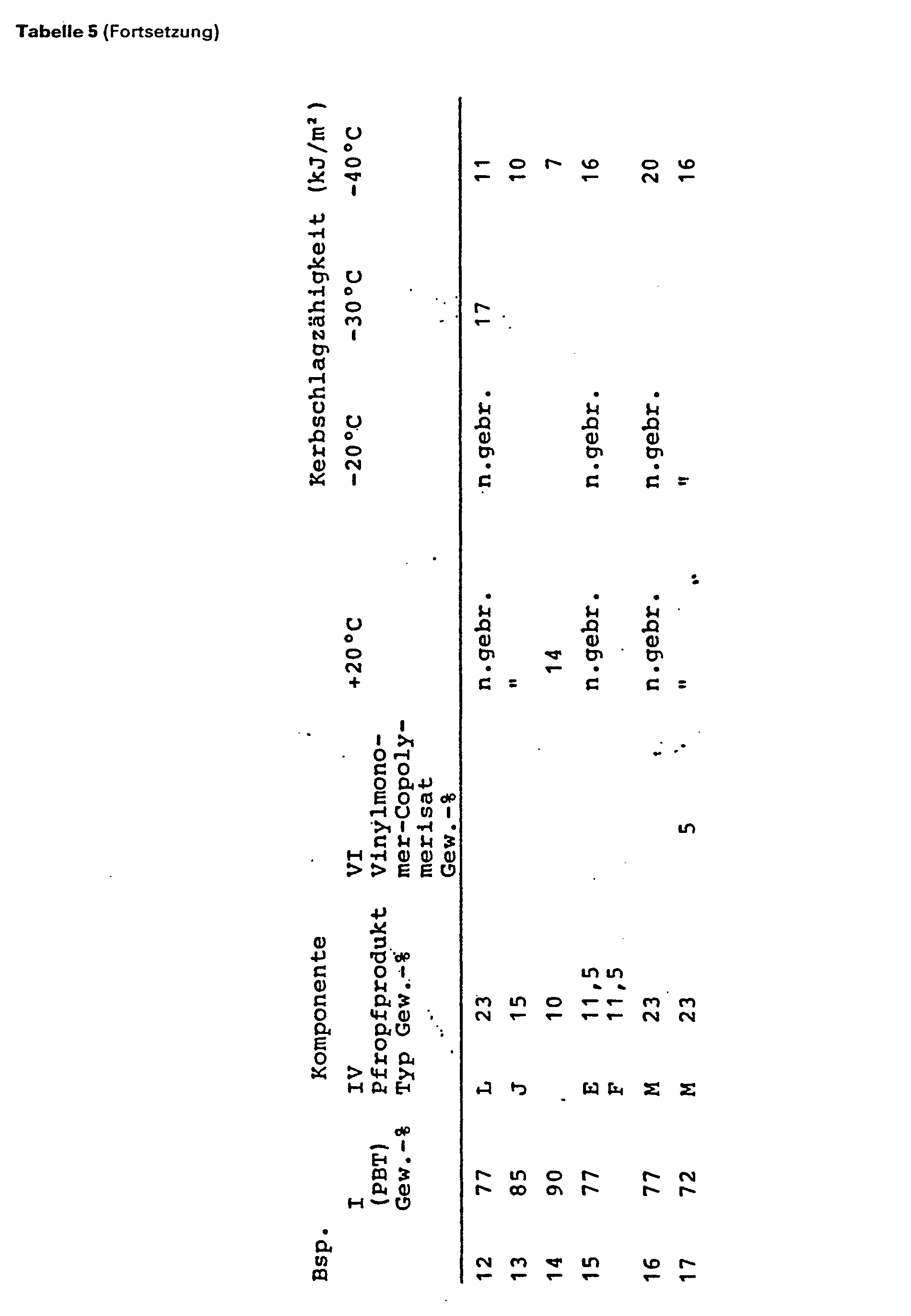

### Vergleichsuntersuchungen

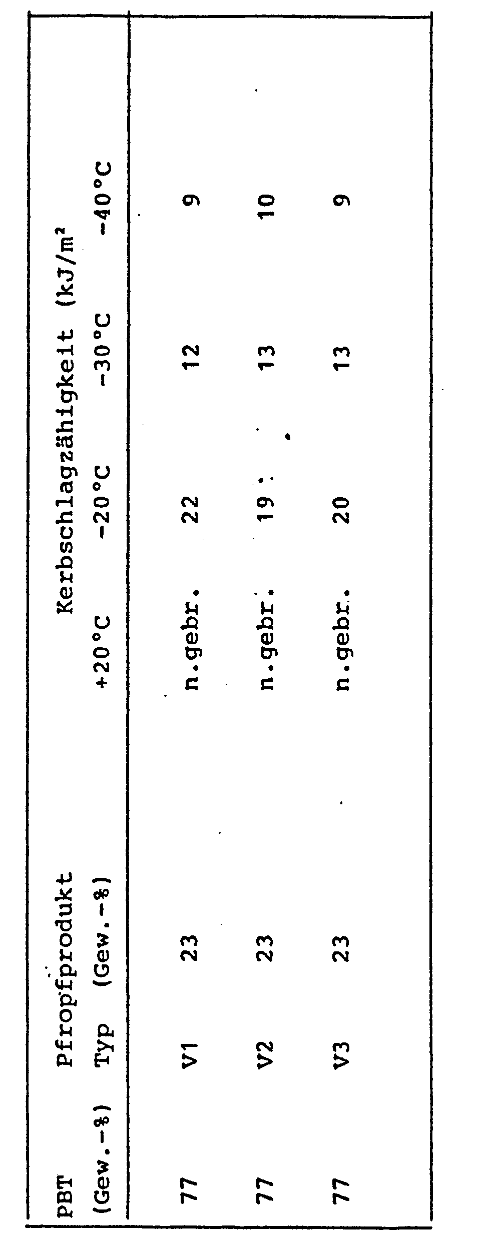

Die Massetemperatur im Extruder betrug 260°C, in der Spritzgußmaschine 250°C, die Formtemperatur betrug 80°C. Die Gewichtsangaben beziehen sich auf die Formmassen.
1) Vergleichsversuche
2) n.gebr. = nicht gebrochen

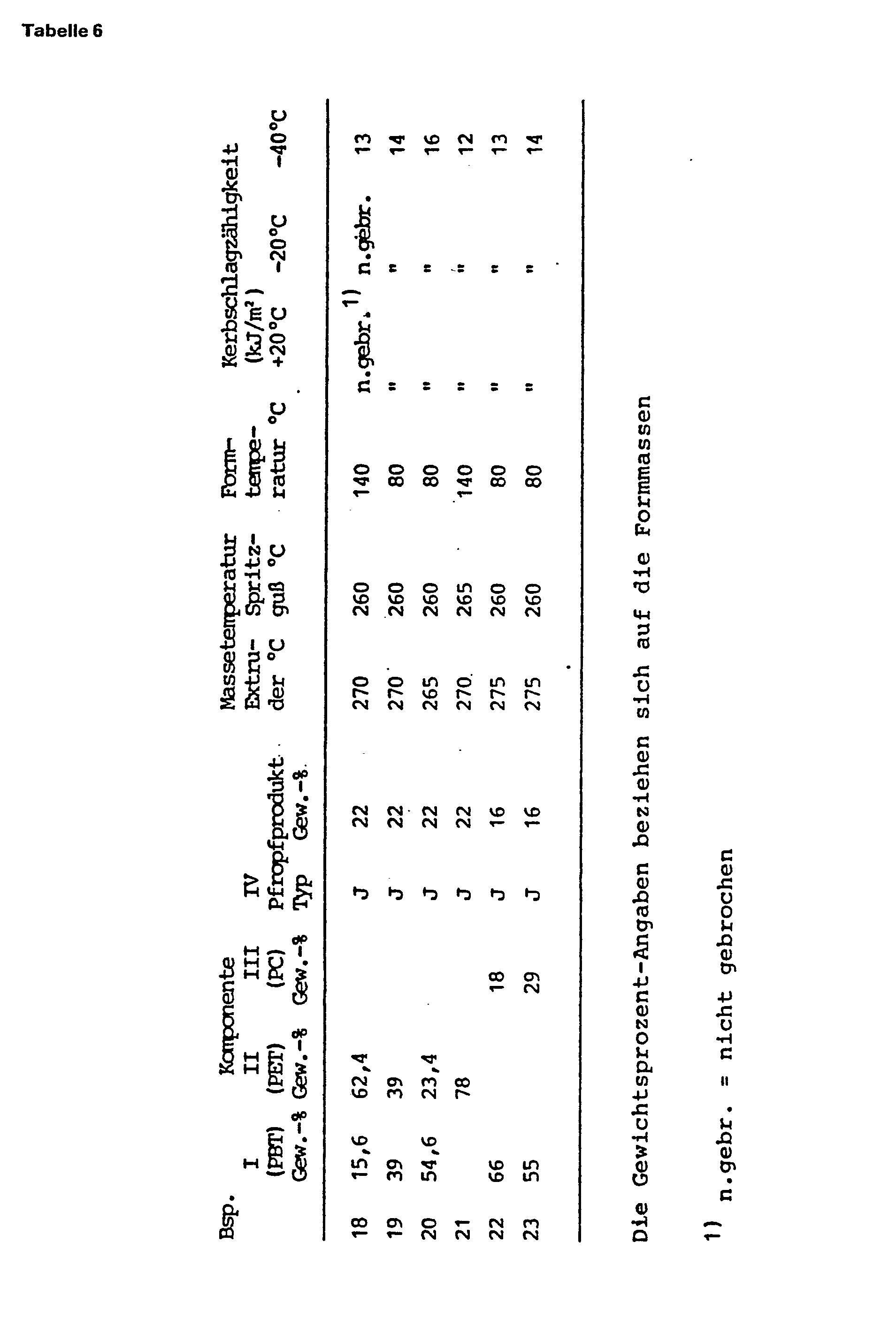

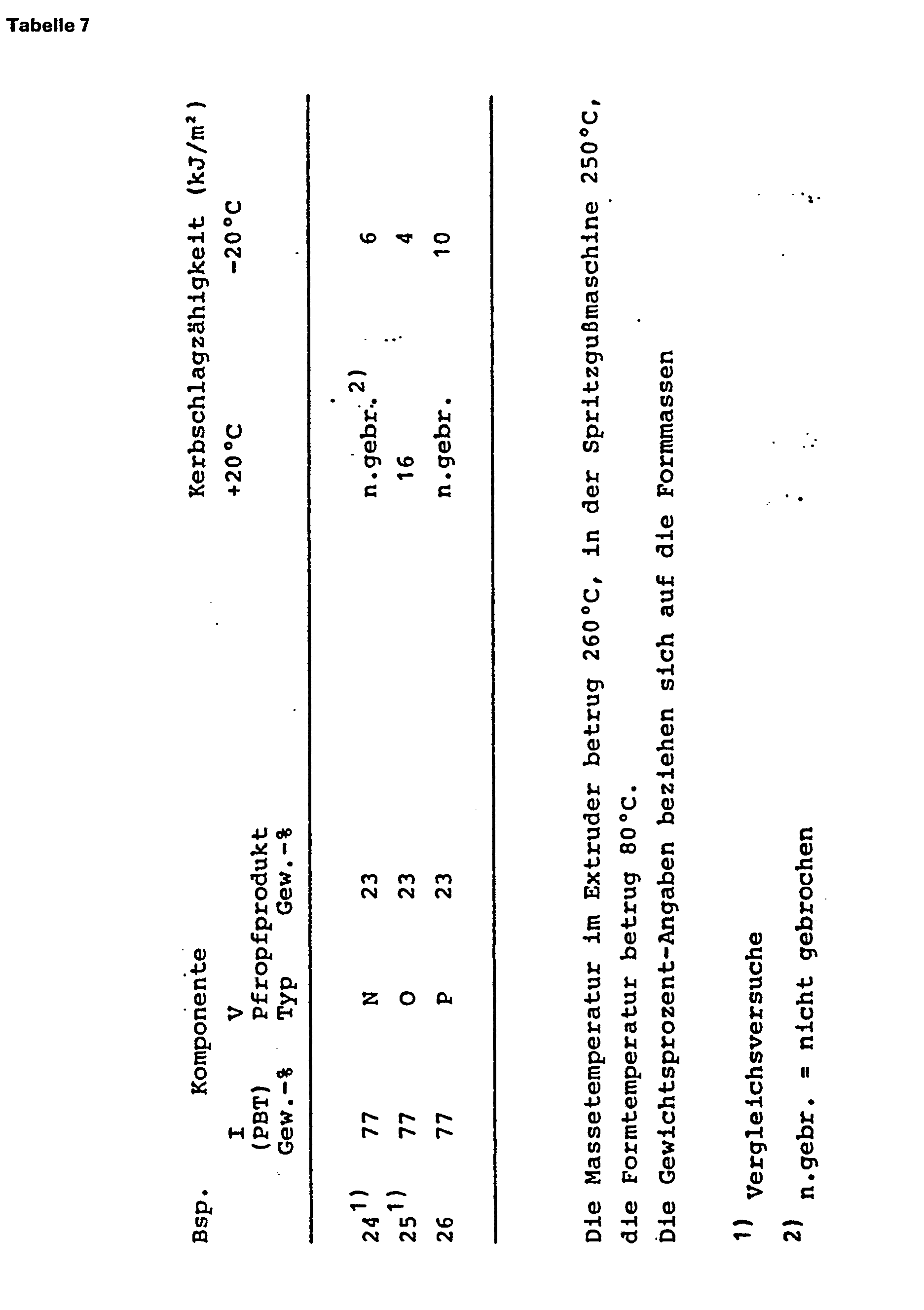

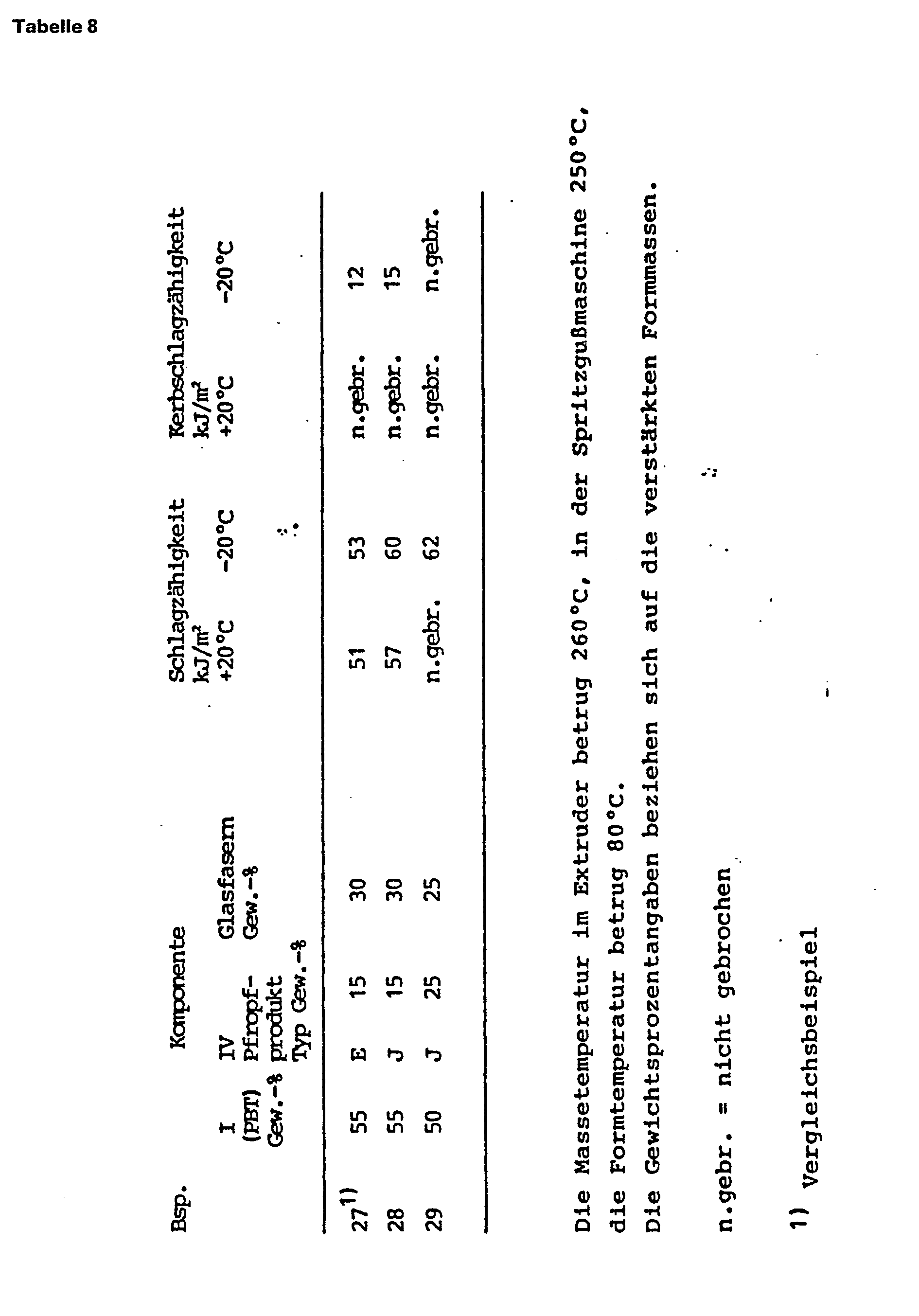

## Patentansprüche

1. Thermoplastische Formmassen aus
A) 65 - 97 Gew.-% (bezogen auf A + B) thermoplastischem Polyester aus aromatischen Dicarbonsäuren (oder deren Derivaten) und aliphatischen, cycloaliphatischen, araliphatischen oder aromatischen Diolen,
wobei bis zu 80 Gew.-% des thermoplastischen Polyesters A durch aromatisches Polycarbonat ersetzt sein können, und
B) 3 - 35 Gew.-% (bezogen auf A + B) Pfropfprodukt
von wenigstens einem Vinylmonomeren aus der Reihe Styrol, Acrylnitril, Methylmethacrylat auf teilchenförmige, wenigstens partiell vernetzte Dienkautschuke und/oder Alkylacrylatkautschuke mit mittleren Kautschukteilchendurchmessern von 0,05 bis 1 µm, mit einem Kautschukgehalt der Pfropfprodukte von 60 bis 85 Gew.-% und mit Gelgehalten von mindestens 50 Gew.-%,
mit der Maßgabe, daß gegebenenfalls im Pfropfprodukt B vorliegendes freies Copolymerisat der Pfropfmonomeren mit einem Staudinger-Index [η] 0.6 dl/g, gemessen in DMF bei 25°C, eine Menge von 15 Gew.-% nicht überschreitet,
dadurch gekennzeichnet, daß dem Pfropfprodukt B folgende Kautschuke zugrundeliegen:
a) 20 bis 80 Gew.-% (bezogen auf die Summe a + b und berechnet als Feststoff) eines Kautschuklatex mit einem Teilchendurchmesser d₅₀ von 0,05 bis 0,19 µm und
b) 80 bis 20 Gew.-% (bezogen auf die Summe a + b und berechnet als Feststoff) eines Kautschuklatex mit einem Teilchendurchmesser d₅₀ von 0,2 bis 1,0 µm
mit der Maßgabe, daß
1) d₅₀ (b) um den Faktor 1,5 bis 8 größer ist als d₅₀ (a),
2) der Quotient Q = (d₉₀ - d₁₀)/d₅₀ der einzelnen Kautschuke jeweils höchstens 2 und
3) die Differenz d₁₀ (b) - d₉₀ (a) 0,01 bis -0,10, betragen.

2. Thermoplastische Formmassen nach Anspruch 1, dadurch gekennzeichnet, daß das Pfropfprodukt B durch Vermischen eines Kautschuklatex entsprechend a) und eines Kautschuklatex entsprechend b) und nachfolgender Pfropfpolymerisation der Vinylmonomeren hergestellt worden ist.

3. Thermoplastische Formmassen nach Anspruch 1, dadurch gekennzeichnet, daß das Pfropfprodukt B durch pfropfpolymerisation der Vinylmonomeren auf einen Kautschuklatex entsprechend a) und getrennte Pfropfpolymerisation der Vinylmonomeren auf einen Kautschuklatex entsprechend b) und anschließendes Vermischen der so erhaltenen Pfropfprodukte hergestellt worden ist.

4. Thermoplastische Formmassen nach Anspruch 1, dadurch gekennzeichnet, daß die Dienkautschuke bzw. die Alkylacrylatkautschuke einen Gelgehalt von ≥80 Gew.-% aufweisen.

5. Thermoplastische Formmassen nach Anspruch 1, dadurch gekennzeichnet, daß die Alkylacrylatkautschuke mit Triallylcyanurat und/oder Triallylisocyanurat vernetzt sind.

6. Thermoplastische Formmassen nach Anspruch 1, dadurch gekennzeichnet, daß die Alkylacrylatkautschuke einen Polybutadien-Kern enthalten.

7. Thermoplastische Formmassen nach Anspruch 1, dadurch gekennzeichnet, daß sie ≤ 60 Gew.-% Glasfasern enthalten.

## Claims

1. Thermoplastic moulding compositions comprising
A) 65 - 97% by weight (based on A + B) of a thermoplastic polyester of aromatic dicarboxylic acids (or their derivatives) and aliphatic, cycloaliphatic, araliphatic or aromatic diols,
it being possible for up to 80% by weight of the thermoplastic polyester A to be replaced by an aromatic polycarbonate, and
B) 3 - 35% by weight (based on A + B) of a graft product of at least one vinyl monomer from the series comprising styrene, acrylonitrile and methyl methacrylate, on particulate, at least partially cross-linked diene rubbers and/or alkyl acrylate rubbers having average rubber particle diameters of 0.05 to 1 um, the rubber content of the graft products being 60 to 85% by weight and the gel contents being at least 50% by weight, with the proviso that the quantity of free copolymer of the graft monomers which is possibly present in the graft product B and has a Staudinger index [η] ≤ 0.6 dl/g, measured in DMF at 25°C, is not greater than 15% by weight, characterised in that the graft product B is based on the following rubbers:
a) 20 to 80% by weight (based on the sum of a + b and calculated as solids) of a rubber latex having a particle diameter d₅₀ of 0.05 to 0.19 µm and
b) 80 to 20% by weight (based on the sum of a + b and calculated as solids) of a rubber latex having a particle diameter d₅₀of 0.2 to 1.0 µm,
with the proviso that
1) d₅₀ (b) is larger than dₛₒ (a) by a factor of 1.5 to 8,
2) the quotient Q - (dgₒ - d₁₀)/d₅₀ of the individual rubbers is in each case at most 2 and
3) the difference d₁₀ (b) - dgₒ (a) is 0.01 to -0.10.

2. Thermoplastic moulding compositions according to Claim 1, characterised in that the graft product B has been produced by mixing a rubber latex corresponding to a) and a rubber latex corresponding to b) and subsequent graft polymerisation of the vinyl monomers.

3. Thermoplastic moulding compositions according to Claim 1, characterised in that the graft product B has been produced by graft polymerisation of the vinyl monomers on to a rubber latex corresponding to a) and separate graft polymerisation of the vinyl monomers on to a rubber latex corresponding to b) and subsequent mixing of the graft products thus obtained.

4. Thermoplastic moulding compositions according to Claim 1, characterised in that the diene rubbers or the alkyl acrylate rubbers have a gel content of > 80% by weight.

5. Thermoplastic moulding compositions according to Claim 1, characterised in that the alkyl acrylate rubbers are cross-linked with triallyl cyanurate and/or triallyl isocyanurate.

6. Thermoplastic moulding compositions according to Claim 1, characterised in that the alkyl acrylate rubbers contain a polybutadiene core.

7. Thermoplastic moulding compositions according to Claim 1, characterised in that they contain < 80% by weight of glass fibres.

## Revendications

1. Mélanges à mouler thermoplastiques formés
A) de 65 à 97 % en poids (par rapport à A + B) d'un polyester thermoplastique obtenu à partir d'acides dicarboxyliques aromatiques (ou de leurs dérivés) et de diols aliphatiques, cycloaliphatiques, araliphatiques ou aromatiques,
une proportion allant jusqu'à 80 % en poids du polyester thermoplastique A pouvant être remplacée par un polycarbonate aromatique et
B) de 3 à 35 % en poids (par rapport à A + B) d'un produit de greffage d'au moins un monomère vinylique de la série styrène, acrylonitrile, méthacrylate de méthyle, sur des caoutchoucs diéniques et/ou des caoutchoucs du type acrylate d'alkyle en particules, au moins partiellement réticulés, avec des diamètres moyens des particules de caoutchouc de 0,05 à 1 µm, une teneur en caoutchouc des produits de greffage de 60 à 85 % en poids et des teneurs en gel d'au moins 50 % en poids,
sous réserve que le produit libre de copolymérisation des monomères greffés se trouvant éventuellement dans le produit greffé B avec un indice de Staudinger [η] inférieur ou égal à 0,6 dl/g, mesuré dans le DMF à 25°C, ne dépasse pas une quantité de 15 % en poids,
caractérisés en ce que le produit de greffage B est basé sur:
a) 20 à 80 % en poids (par rapport à la somme a + b et exprimé sur base solide) d'un latex de caoutchouc ayant un diamètre dₛₒ de particules de 0,05 à 0,19 um et
b) 80 à 20 % en poids (par rapport à la somme a + b et exprimé sur base solide) d'un latex de caoutchouc ayant un diamètre d₅ₒ de particules de 0,2 à 1,0 µm sous réserve que
1 ) la valeur dₛₒ de (b) soit supérieure d'un facteur 1,5 à 8 à la valeur d₅₀ de (a),
2) le quotient Q = (dgₒ - dₗₒ)/d₅ₒ des caoutchoucs individuels soit dans chaque cas au maximum égal à 2 et
3) la différence d₁₀ (b) - dgₒ (a) ait une valeur de 0,01 à 0,10.

2. Mélanges à mouler thermoplastiques suivant la revendication 1, caractérisés en ce que le produit de greffage B a été préparé par mélange d'un latex de caoutchouc correspondant à a) et d'un latex de caoutchouc correspondant à b), le mélange étant suivi d'une polymérisation par greffage des monomères vinyliques.

3. Mélanges à mouler thermoplastiques suivant la revendication 1, caractérisés en ce que le produit de greffage B a été préparé par polymérisation par greffage des monomères vinyliques sur un latex de caoutchouc correspondant à a) et polymérisation séparée par greffage des monomères vinyliques sur un latex de caoutchouc correspondant à b), suivie du mélange des produits de greffage ainsi obtenus.

4. Mélanges à mouler thermoplastiques suivant la revendication 1, caractérisés en ce que les caoutchoucs diéniques et les caoutchoucs d'acrylate d'alkyle présentent une teneur en gel supérieure ou égale à 80 % en poids.

5. Mélanges à mouler thermoplastiques suivant la revendication 1, caractérisés en ce que les caoutchoucs d'acrylate d'alkyle sont réticulés avec du cyanurate de triallyle et/ou de l'isocyanurate de triallyle.

6. Mélanges à mouler thermoplastiques suivant la revendication 1, caractérisés en ce que les caoutchoucs d'acrylate d'alkyle contiennent un noyau de polybutadiène.

7. Mélanges à mouler thermoplastiques suivant la revendication 1, caractérisés en ce qu'ils contiennent une quantité de fibres de verre inférieure ou égale à 60 % en poids.
